# FASCICULE DE BREVET EUROPEEN

(11) **EP 3 819 133 B1**
(45) Date de publication et mention de la délivrance du brevet: **05.07.2023**
(21) Numéro de dépôt: 20206195.8
(22) Date de dépôt: 06.11.2020
(51) Int. Cl.: B60B 15/28

(54) **PROCEDE ET DISPOSITIF DE FIXATION DE MASSES D'ALOURDISSEMENT SUR UNE ROUE D' ENGIN AGRICOLE**
VERFAHREN UND VORRICHTUNG ZUR BEFESTIGUNG VON GEWICHTEN AN EINEM RAD EINER LANDWIRTSCHAFTLICHEN MASCHINE
METHOD AND DEVICE FOR ATTACHING BALLAST WEIGHTS TO A WHEEL OF A FARM VEHICLE

(30) Priorité: 07.11.2019 FR 1912511
(43) Date de publication de la demande: 12.05.2021
(73) Titulaire: EASYMASS, 02190 Guignicourt (FR)
(72) Inventeur: VERCAUTEREN, Hans, 02190 BERCY AU BAC (FR); KEM, Daniel, 02160 MOULINS (FR); DEFRANCQ, Hubert, 02190 GUIGNICOURT (FR)
(74) Mandataire: IPAZ

(56) Documents cités:
- EP-A1- 3 385 085
- EP-B1- 3 266 622
- US-A1- 2010 059 976
- US-A1- 2019 092 092
- US-B2- 8 944 521

## Description

L'invention se rapporte au domaine des dispositifs pour lester les roues des engins agricoles, ainsi qu'aux procédés de lestage associés.

De manière générale, les engins agricoles, tels que les tracteurs, sont conçus pour être polyvalents et servent à entrainer une grande variété d'outils à des vitesses variables et sur des surfaces diverses telles que des routes, des chemins et des champs.

Pour pouvoir transmettre un effort de traction permettant d'utiliser la puissance disponible, ils doivent être suffisamment lourds lorsqu'ils travaillent à faible vitesse, ou encore par exemple sur un terrain accidenté.

Cependant, un poids important se traduit par un accroissement de la résistance au roulement, en particulier en sol meuble, ce qui entraîne une consommation de puissance inutile, par exemple lorsque le déplacement est en montée.

De plus, plus la charge supportée par les pneumatiques est importante, plus la pression de gonflage doit être élevée, ce qui se traduit par un effet de tassement plus appuyé qui génère des difficultés de croissances des plantes et une consommation d'énergie supérieure lorsqu'il s'agit d'ameublir ces zones compactées.

Enfin le poids total roulant autorisé étant limité sur le plan de la réglementation, si le lestage reste présent sur le tracteur cela se traduit par une baisse de la charge utile transportable.

Afin de respecter les règles techniques de lestage et de gonflage, fonction notamment de la vitesse, la pratique consiste à ajouter du lest seulement quand cela est nécessaire, pour que le tracteur puisse avancer avec un outil donné.

Cependant, les utilisateurs ont tendance à laisser le lestage sur le tracteur, ce qui engendre les inconvénients décrits ci-dessus, quand il n'est pas aisé de procéder au retrait dudit lestage.

Pour ces mêmes raisons, l'optimisation du lestage n'est pas forcément mise en oeuvre et il en résulte des pertes d'efficacité.

Une solution utilisée consiste à ajouter une masse sur le relevage avant du tracteur, lorsqu'un seul outil est utilisé à l'arrière.

Toutefois, cette solution ne permet pas d'assurer un lestage suffisant et de maintenir un ratio de poids supporté par chaque essieu convenable.

Il est par ailleurs connu d'ajouter des masses en fonte au niveau de la jante des roues arrière.

Lorsque ces masses sont de type monobloc, elles sont alors difficiles à manipuler et ne permettent pas une modulation du lestage. Elles peuvent être constituées d'un assemblage de masses élémentaires, mais le montage et le démontage une par une est fastidieux. Il faut en effet à chaque fois aligner les perçages pour faciliter le centrage et recourir à plusieurs éléments de fixation.

Dans l'optique de pallier tout ou partie de ces inconvénients, le document EP 3266622 B1 propose un dispositif et un procédé pour assembler et désassembler très simplement et très rapidement une ou plusieurs masses de lestage sur un essieu d'engin agricole.

Le principe consiste à fixer un socle sur l'essieu de la roue de l'engin agricole, puis, lorsque le lestage est rendu nécessaire à monter par complémentarité de forme, le nombre de masses nécessaires sur le socle. La solidarisation de l'ensemble ainsi monté s'effectue en utilisant une clef adaptable sur un élément de retenue du socle. Cette clef est généralement une tige pourvue d'une extrémité filetée ou dotée d'un crochet, qui se fixe alors par vissage ou par accroche sur le socle. Cependant, la solidarisation de l'ensemble n'est pas aisée à mettre en oeuvre (dévissages dans le cas d'un assemblage par vissage, légers mouvements dans le cas d'un crochet solidarisé à un anneau).

Il est également connu le document US 2019/092092 qui décrit un procédé et un dispositif de fixation de masses d'alourdissement sur une roue d'engin agricole, mettant en oeuvre une masse équipée d'un dispositif de verrouillage doté d'une multitude de crochets pouvant tourner depuis une position "déverrouillée" vers une position verrouillée, et vice versa. La position "déverrouillée" est à chaque fois sécurisée au moyen d'un boulon et la position "verrouillée" est à chaque fois sécurisée au moyen d'une attache. Ce procédé et ce dispositif de fixation présentent toutefois une multiplication de pièces qui alourdit le processus de fabrication et de montage.

Toutefois, il s'est avéré nécessaire de faciliter, de simplifier et de sécuriser le montage de la clef sur le socle et de pouvoir ajuster la longueur de la clef en fonction de l'épaisseur de la masse.

L'invention a donc pour but d'éliminer tout ou partie des inconvénients mentionnés ci-avant au moyen d'un procédé et d'un dispositif de fixation de masses d'alourdissement adaptable au nombre de masses utilisé et simple d'utilisation.

L'invention a en particulier pour objet un dispositif de fixation de masses d'alourdissement sur une roue d'engin agricole, le dispositif comportant :
- une clef,
- un socle formant approximativement un disque, préférentiellement ajouré avec une ouverture, le socle comportant en outre sur l'une de ses faces, dite face avant, au moins une surface permettant un appui selon une direction radiale au disque, ainsi qu'au moins une surface formant une butée selon une direction perpendiculaire au disque,
- un élément de serrage destiné à être monté sur la clef,
le socle comportant en outre dans son épaisseur un évidement débouchant sur sa face avant et apte à loger et à retenir une extrémité de la clef, ladite clef s'étendant dès lors depuis ladite face avant et se retrouvant bloquée en rotation.

Des caractéristiques optionnelles de l'invention, complémentaires ou de substitution sont énoncées ci-après.

Selon un mode de réalisation particulier, la clef est dotée d'une tige fixée en l'une de ses extrémités à une base tandis que l'évidement est constitué d'un renfoncement destiné à loger la base de la clef, prolongé en outre par une rigole destinée à loger la tige et débouchant sur la face avant du socle.

Selon d'autres caractéristiques, le socle comporte deux surfaces d'appui s'étendant de manière circonférentielle et diamétralement opposées.

Selon d'autres caractéristiques encore, le socle comporte entre trois et huit, préférentiellement six, surfaces de butée faisant saillie depuis la face avant du socle.

Selon d'autres caractéristiques encore, le renfoncement est débouchant sur la face arrière, opposée à la face avant du socle.

Selon d'autres caractéristiques encore, le socle comporte des trous de fixation traversant.

Selon un mode de réalisation particulier, la tige de la clef traverse la base et comporte en l'une de ses extrémités une tête logée dans un évidement de la base, ladite tête étant retenue dans ledit évidement au moyen d'une rondelle vissée dans la base.

Avantageusement, la clef présente entre deux et cinq, préférentiellement trois longueurs différentes de tige.

L'invention a également pour objet un procédé de fixation de masses d'alourdissement sur une roue d'engin agricole, au moyen d'un dispositif comportant une clef, un socle formant approximativement un disque, préférentiellement ajouré avec une ouverture, le socle comportant en outre sur l'une de ses faces, dite face avant, au moins une surface permettant un appui selon une direction radiale au disque, ainsi qu'au moins une surface formant une butée selon une direction perpendiculaire au disque, un élément de serrage destiné à être monté sur la clef, le socle comportant dans son épaisseur un évidement débouchant sur sa face avant et apte à loger et à retenir une extrémité de la clef,
caractérisé en ce qu'il comporte un ensemble d'étapes dans lesquelles :
- on fixe le socle sur l'essieu de la roue,
- on monte au moins une première masse sur le socle, la première masse reposant en appui contre la au moins une surface d'appui et étant en butée contre la au moins une surface de butée,
- on loge l'extrémité dédiée de la clef dans l'évidement,
- on monte l'élément de serrage sur la clef de manière à plaquer la au moins une masse contre la face avant du socle.

Des caractéristiques optionnelles de l'invention, complémentaires ou de substitution sont énoncées ci-après.

Selon un mode de réalisation particulier, la clef est dotée d'une tige fixée en l'une de ses extrémités à une base tandis que l'évidement est constitué d'un renfoncement destiné à loger la base de la clef, et prolongé par une rigole destinée à loger une partie de la tige et débouchant sur la face avant du socle, de sorte qu'on loge la base et une partie de la tige de la clef respectivement dans le renfoncement et la rigole.

Selon certaines caractéristiques, avant l'étape dans laquelle on loge dans l'évidement l'extrémité dédiée de la clef, on procède au montage de la base sur la tige, la tige traversant la base et comportant en l'une de ses extrémités une tête logée dans un évidement de la base, ladite tête étant retenue dans ledit évidement au moyen d'une rondelle vissée dans la base.

Selon d'autres caractéristiques, lors du montage de la base sur la tige de la clef, on procède au choix de la tige parmi deux à cinq, préférentiellement trois, longueurs différentes.

Selon d'autres caractéristiques encore, le renfoncement est débouchant sur la face arrière, opposée à la face avant du socle, de sorte qu'on peut loger la base et une partie de la tige de la clef respectivement dans le renfoncement et la rigole, depuis la face arrière du socle.

Selon d'autres caractéristiques encore, on monte la au moins première masse sur deux surfaces d'appui du socle s'étendant de manière circonférentielle et diamétralement opposées, et contre trois à huit, préférentiellement six, surfaces de butée faisant saillie depuis la face avant du socle.

D'autres avantages et particularités de l'invention apparaîtront à la lecture de la description détaillée de mises en oeuvre et de modes de réalisation nullement limitatifs, et des dessins annexés suivants :
[Fig.1] Cette figure illustre schématiquement une vue en perspective de la face avant d'un dispositif de fixation de masses d'alourdissement sur une roue d'engin agricole selon un mode de réalisation de l'invention.
[Fig.2] Cette figure illustre schématiquement une vue en perspective de la face arrière d'un dispositif de fixation de masses d'alourdissement sur une roue d'engin agricole selon un mode de réalisation de l'invention.

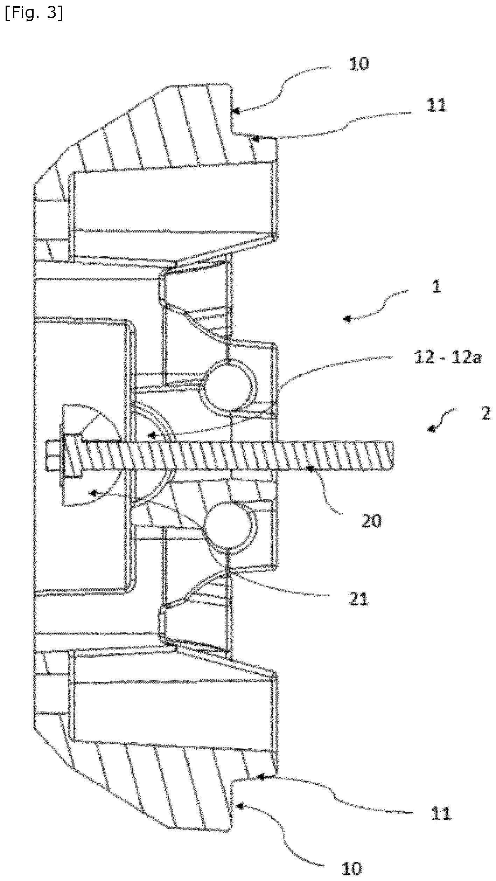

[Fig.3] Cette figure illustre schématiquement une vue en coupe transversale d'un dispositif de fixation de masses d'alourdissement sur une roue d'engin agricole selon un mode de réalisation de l'invention.

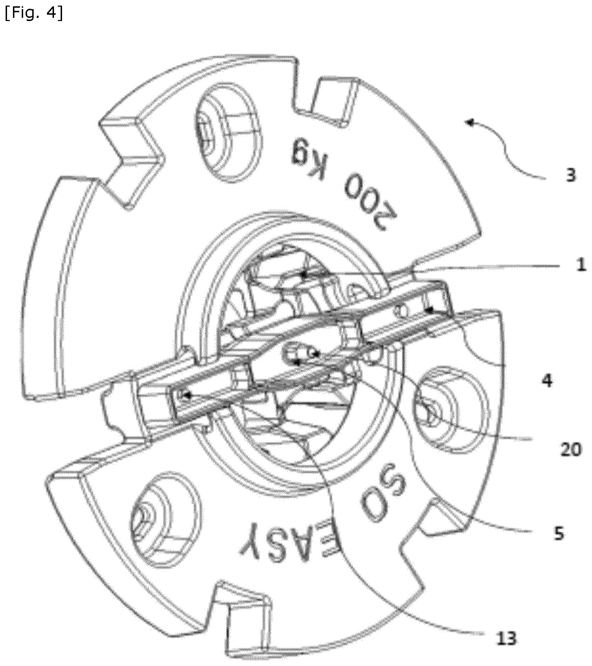

[Fig.4] Cette figure illustre schématiquement une vue en perspective de la face avant d'une masses d'alourdissement montée sur un dispositif de fixation selon l'invention.

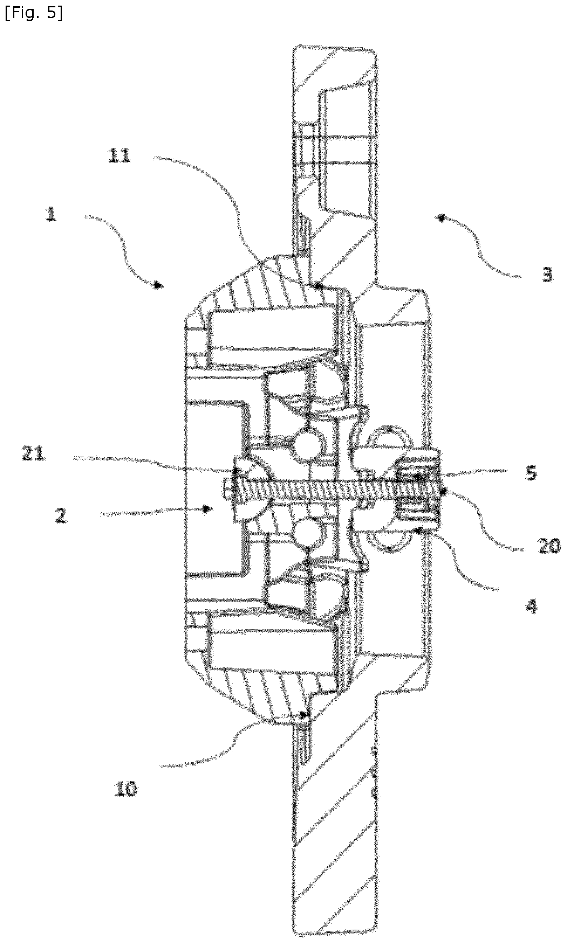

[Fig.5] Cette figure illustre schématiquement une vue en coupe transversale d'une masses d'alourdissement montée sur un dispositif de fixation selon l'invention.
[Fig.6] Cette figure illustre schématiquement une vue éclatée d'un élément du dispositif de fixation selon l'invention.
[Fig.7] Cette figure illustre schématiquement une vue en perspective dudit élément assemblé.
[Fig.8] Cette figure illustre schématiquement une vue en coupe longitudinale dudit élément.

A des fins de clarté et de concision, les références sur les figures correspondent aux mêmes éléments.

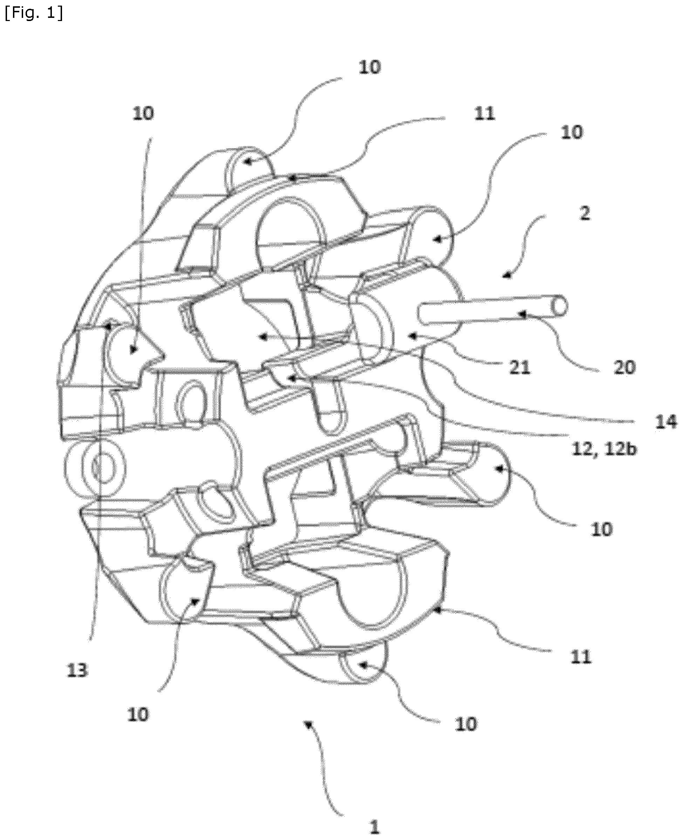

La figure 1 illustre schématiquement une vue en perspective de la face avant d'un dispositif de fixation de masses d'alourdissement.

Ce dispositif comprend principalement une clef 2 et un socle 1 qui forme approximativement un disque.

Ce socle peut être éventuellement ajouré avec une ouverture 14.

Le socle est doté d'une face avant et d'une face arrière.

Sur sa face avant, le socle comporte au moins une surface 11 permettant un appui selon une direction radiale.

Dans le mode de réalisation de la figure 1, le socle comporte deux portions d'arc de cercle diamétralement opposées et portées chacune par une avancée faisant saillie vers l'avant. Ces avancées contribuent à l'épaisseur du socle et portent chacune une surface d'appui 11 formée par la portion d'arc de cercle.

Sur sa face avant, le socle comporte aussi au moins une surface 10 formant une butée selon une direction perpendiculaire au socle.

Dans le mode de réalisation de la figure 1, le socle comporte plus particulièrement six surfaces de butées faisant saillie vers l'avant du socle, et réparties de manière équidistante en périphérie.

Avantageusement, le socle 1 comporte entre trois et huit, préférentiellement six, surfaces de butée 10 faisant saillie depuis la face avant du socle 1.

Ainsi, c'est le socle du dispositif qui porte les masses d'alourdissement, ces masses, généralement circulaires et évidées, reposant sur les surfaces d'appui radial d'une part et reposant d'autre part sur les surfaces de butée 10.

Afin, de sécurisé les masses en appui et en butée sur le socle, le socle 1 comporte en outre dans son épaisseur un évidement 12 débouchant sur sa face avant et apte à loger et à retenir une extrémité 21 de la clef 2.

Lorsque l'extrémité 21 de la clef est logée dans l'évidement 12, ladite clef s'étendant dès lors depuis ladite face avant et se retrouve bloquée en rotation.

L'évidement 12 épouse la forme de l'extrémité 21 de la clef 2 de sorte que l'extrémité 21 ne peut plus tourner sur elle-même et ne peut pas sortir par l'endroit par lequel l'évidement 12 débouche sur la face avant du socle. Seule la clef 2 débouche depuis cet endroit.

Ainsi, la clef est retenue dans le socle 1 et bloquée en rotation.

Le dispositif comporte en outre un élément de serrage 4, 5, pour qu'une fois la ou les masses en appui et en butée, on monte cet élément de serrage sur la clef pour plaquer et fixer la ou les masses contre le socle.

Le socle 1 peut avantageusement comporter des trous de fixation traversant 13, pour pouvoir monter le socle sur la roue.

Selon un mode de réalisation, l'évidement 12 est débouchant sur la face arrière du socle, la face arrière du socle étant opposée à la face avant du socle 1.

Ainsi, pour loger l'extrémité 21 de la clef 2, il est possible d'introduire la clef 2 depuis la face arrière.

Dans le cas où le socle est ajouré avec une ouverture 14, on peut alors introduire l'extrémité 21 de la clef dans l'ouverture 14 et accéder ainsi à l'évidement 12.

Avantageusement, la clef 2 peut être dotée d'une tige 20 fixée de manière amovible en l'une de ses extrémités à une base 21.

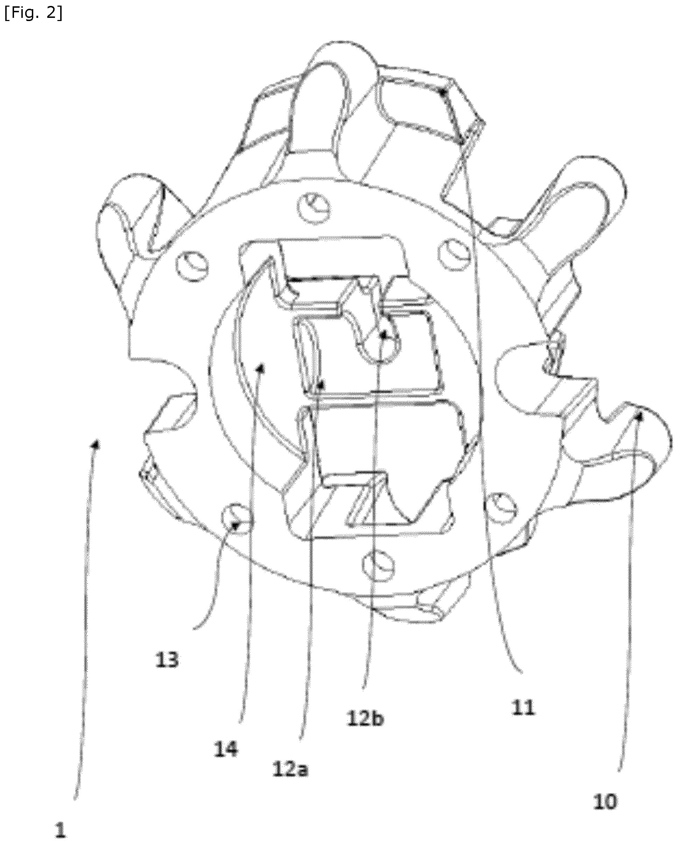

De manière correspondante et tel que représenté en figure 2, l'évidement 12 du socle est constitué d'un renfoncement 12a de forme complémentaire à la base 21 et destiné à loger la base 21 de la clef 2. L'évidement 12 comprend en outre une rigole 12b qui prolonge le renfoncement 12a et qui débouche sur la face avant du socle 1. Cette rigole est destinée à loger une partie de la tige 20.

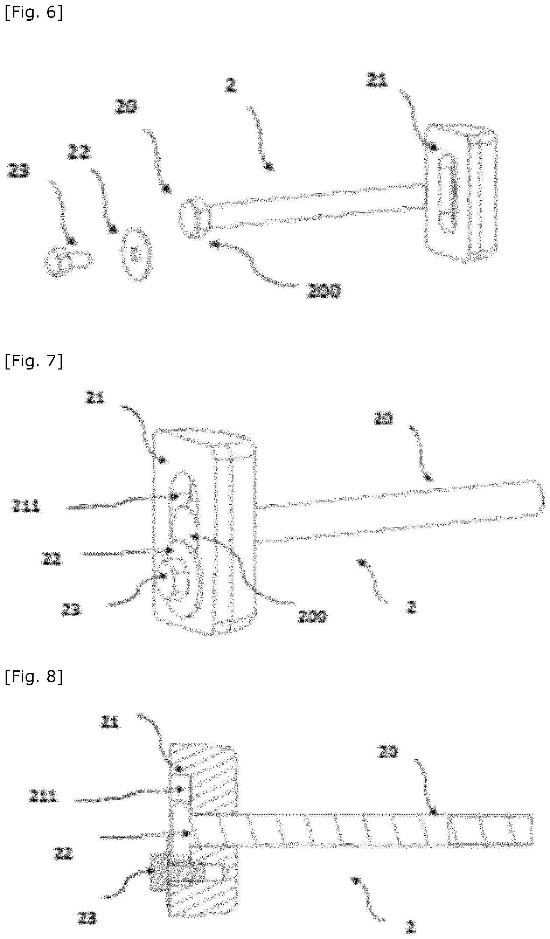

Avantageusement, et selon un mode de réalisation décrit en figures 6, 7 et 8, la clef 2 résulte du montage de la tige 20 sur la base 21. La tige 20 comporte en l'une de ses extrémités une tête 200 logée dans un évidement 211 de la base 21. Ladite tête est alors retenue dans ledit évidement au moyen d'une rondelle 22 vissée en 23 dans la base 21.

Cette configuration permet de changer ainsi des pièces de la clef quand l'une d'entre elles est défectueuse.

Cette configuration permet surtout de modifier la longueur de tige souhaitée.

En effet, selon le nombre de masses qu'il est nécessaire de monter sur le socle, il faut recourir à une tige plus ou moins longue.

En l'occurrence, la clef présente entre deux et cinq, préférentiellement trois longueurs différentes de tige que l'on peut monter au choix selon le besoin.

Bien entendu, selon un mode de réalisation moins avantageux, le dispositif de fixation de masses d'alourdissement pourrait comporter plusieurs clefs dotées chacune d'une tige non amovible, mais de longueur différente.

Concernant maintenant le procédé de fixation de masses d'alourdissement sur une roue d'engin agricole, au moyen d'un dispositif conforme à l'invention, il convient de procéder aux étapes décrites ci-après.

Tout d'abord on fixe le socle 1 sur la roue, cette étape pouvant par exemple s'effectuer en utilisant les trous de vissage 13.

Dans le cas où le socle 2 n'est pas ajouré suivant une ouverture 14, l'évidement 12 débouche alors nécessairement sur la face arrière du socle.

Il convient de monter avant l'étape de fixation du socle 1 sur la roue, la clef 2 depuis la face arrière du socle en insérant la tige 20 jusqu'à loger dans le renfoncement 12a la base 21 de la clef 2.

Ensuite, on monte au moins une première masse 3 sur le socle 1, de sorte que la première masse repose en appui contre la ou les surfaces d'appui 11. On plaque ensuite ladite masse contre la ou les surfaces de butée 10.

Les masses de lestage pouvant être mises en oeuvre dans l'invention sont des pièces de fonderie qui ne nécessitent pas de cotes précises puisqu'elles sont simplement destinées à être montées sur le socle et emboîtées l'une dans l'autre.

A titre d'exemple, ces masses peuvent être les masses décrites dans le document n° EP 3266622 B1.

Ces masses en fonte pèsent quelques centaines de kilos, par exemple 200 kg. Leur assemblage peut permettre des lestages supérieurs à une tonne par roues.

Dans le cas où la clef n'est pas montée sur le socle, on fait passer l'extrémité 21 de la clef par l'ouverture 14 du socle ajouré et on loge l'extrémité dédiée 21 de la clef 2 dans l'évidement 12.

Ainsi, la clef ne peut plus être retirée par une simple traction et la clef est bloquée en rotation.

Enfin, on monte l'élément de serrage 4, 5 sur la clef de manière à plaquer la première masse 3 contre la face avant du socle 1.

Lorsque la clef 2 est dotée d'une tige 20 fixée en l'une de ses extrémités à une base 21 tandis que l'évidement 12 est constitué d'un renfoncement 12a destiné à loger la base 21 de la clef 2, et prolongé par une rigole 12b débouchant sur la face avant du socle 1, on loge la base 21 et une partie de la tige 20 de la clef 2 respectivement dans le renfoncement 12a et la rigole 12b.

Avant l'étape dans laquelle on loge l'extrémité dédiée 21 de la clef 2 dans l'évidement 12, on procède au montage de la base 21 sur la tige 20.

On fait donc traverser la base 21 par la tige 20 et on loge la tête 200 de l'une de ses extrémités dans un évidement 211 de la base 21.

La tête 200 est ainsi retenue dans ledit évidement 211 au moyen d'une rondelle 22 vissée 23 dans la base 21.

Lors du montage de la base 21 sur la tige 20 de la clef 2, on procède au choix de la tige 20 parmi les différentes longueurs possibles et en fonction du nombre de masses utilisées.

## Revendications

1. Dispositif de fixation de masses d'alourdissement sur une roue d'engin agricole, **caractérisé en ce que** le dispositif comporte :
- une clef (2) dotée d'une extrémité (21),
- un socle (1) formant approximativement un disque, préférentiellement ajouré avec une ouverture (14), le socle comportant en outre sur l'une de ses faces, dite face avant, au moins une surface (11) permettant un appui selon une direction radiale du socle, ainsi qu'au moins une surface (10) formant une butée selon une direction perpendiculaire au socle,
- un élément de serrage (4, 5) destiné à être monté sur la clef (2), de manière à plaquer la ou les masses contre la face avant du socle (1)
le socle (1) comportant en outre dans son épaisseur un évidement (12) débouchant sur sa face avant et destiné à loger et à bloquer l'extrémité (21) de la clef (2) par complémentarité de forme, l'évidement (12) épousant la forme de l'extrémité (21) de la clef (2) de sorte que l'extrémité (21) ne peut plus tourner sur elle-même et ne peut pas sortir par l'endroit par lequel l'évidement (12) débouche sur la face avant du socle, ladite clef faisant dès lors saillie hors de l'évidement et se retrouvant bloquée en rotation.

2. Dispositif de fixation de masses d'alourdissement selon la revendication 1, **caractérisé en ce que** la clef (2) est dotée d'une tige (20) fixée en l'une de ses extrémités à une base (21) tandis que l'évidement (12) est constitué d'un renfoncement (12a) de forme complémentaire à la base (21) de la clef (2), prolongé en outre par une rigole (12b) destinée à loger une partie de la tige (20) et débouchant sur la face avant du socle (1).

3. Dispositif de fixation de masses d'alourdissement selon l'une quelconque des revendications précédentes, **caractérisé en ce que** le socle (1) comporte deux surfaces d'appui (11) s'étendant de manière circonférentielle et diamétralement opposées.

4. Dispositif de fixation de masses d'alourdissement selon l'une quelconque des revendications précédentes, **caractérisé en ce que** le socle (1) comporte entre trois et huit, préférentiellement six, surfaces de butée (10) faisant saillie depuis la face avant du socle (1).

5. Dispositif de fixation de masses d'alourdissement selon l'une quelconque des revendications 3 à 4 en combinaison avec la revendication 2, **caractérisé en ce que** le renfoncement (12a) est débouchant sur la face arrière, opposée à la face avant du socle (1).

6. Dispositif de fixation de masses d'alourdissement selon l'une quelconque des revendications précédentes, **caractérisé en ce que** le socle (1) comporte des trous de fixation traversant (13).

7. Dispositif de fixation de masses d'alourdissement selon l'une quelconque des revendications 2 à 6, **caractérisé en ce que** la tige (20) de la clef (2) est amovible par rapport à la base (21).

8. Dispositif de fixation de masses d'alourdissement selon l'une quelconque des revendications 2 à 7, **caractérisé en ce que** la tige (20) de la clef (2) traverse la base (21) et comporte en l'une de ses extrémités une tête (200) logée dans un évidement (211) de la base (21), ladite tête étant retenue dans ledit évidement au moyen d'une rondelle (22) vissée (23) dans la base (21).

9. Dispositif de fixation de masses d'alourdissement selon l'une quelconque des revendications 7 à 8, **caractérisé en ce que** la clef présente entre deux et cinq, préférentiellement trois longueurs différentes de tige.

10. Procédé de fixation de masses d'alourdissement sur une roue d'engin agricole, au moyen d'un dispositif comportant une clef (2), un socle (1) formant approximativement un disque, préférentiellement ajouré suivant une ouverture (14), le socle comportant en outre sur l'une de ses faces, dite face avant, au moins une surface (11) permettant un appui selon une direction radiale du disque, ainsi qu'au moins une surface (10) formant une butée selon une direction perpendiculaire au disque, un élément de serrage (4, 5) destiné à être monté sur la clef (2), le socle (1) comportant dans son épaisseur un évidement (12) débouchant sur sa face avant et apte à loger et à retenir une extrémité (21) de la clef (2), l'évidement (12) épousant la forme de l'extrémité (21) de la clef (2) de sorte que l'extrémité (21) ne peut plus tourner sur elle-même et ne peut pas sortir par l'endroit par lequel l'évidement (12) débouche sur la face avant du socle, ladite clef s'étendant dès lors depuis ladite face avant et se retrouvant bloquée en rotation, **caractérisé en ce qu'**il comporte un ensemble d'étapes dans lesquelles :
- on fixe le socle (1) sur l'essieu de la roue,
- on monte au moins une première masse (3) sur le socle (1), la première masse reposant en appui contre la au moins une surface d'appui (11) et étant en butée contre la au moins une surface de butée (10),
- on loge l'extrémité dédiée (21) de la clef (2) dans l'évidement (12),
- on monte l'élément de serrage (4, 5) sur la clef de manière à plaquer la au moins une masse (3) contre la face avant du socle (1).

11. Procédé de fixation de masses d'alourdissement selon la revendication 10, **caractérisé en ce que** la clef (2) est dotée d'une tige (20) fixée en l'une de ses extrémités à une base (21) tandis que l'évidement (12) est constitué d'un renfoncement (12a) destiné à loger la base (21) de la clef (2), et prolongé par une rigole (12b) destinée à loger une partie de la tige (20) et débouchant sur la face avant du socle (1), de sorte qu'on loge la base (21) et une partie de la tige (20) de la clef (2) respectivement dans le renfoncement (12a) et la rigole (12b).

12. Procédé de fixation de masses d'alourdissement selon la revendication 11, **caractérisé en ce qu'**avant l'étape dans laquelle on loge l'extrémité dédiée (21) de la clef (2) dans l'évidement (12), on procède au montage de la base (21) sur la tige (20), la tige (20) traversant la base (21) et comportant en l'une de ses extrémités une tête (200) logée dans un évidement (211) de la base (21), ladite tête étant retenue dans ledit évidement au moyen d'une rondelle (22) vissée (23) dans la base (21).

13. Procédé de fixation de masses d'alourdissement selon la revendication 12, **caractérisé en ce que** lors du montage de la base (21) sur la tige (20) de la clef (2), on procède au choix de la tige (20) parmi deux à cinq, préférentiellement trois, longueurs différentes.

14. Procédé de fixation de masses d'alourdissement selon l'une quelconque des revendications 11 à 13, **caractérisé en ce que** le renfoncement (12a) est débouchant sur la face arrière, opposée à la face avant du socle (1), de sorte qu'on peut loger la base (21) et une partie de la tige (20) de la clef (2) respectivement dans le renfoncement (12a) et la rigole (12b), depuis la face arrière du socle (1).

15. Procédé de fixation de masses d'alourdissement selon l'une quelconque des revendications 10 à 13, **caractérisé en ce qu'**on monte la au moins première masse (3) sur deux surfaces d'appui (11) du socle (1) s'étendant de manière circonférentielle et diamétralement opposées, et contre trois à huit, préférentiellement six, surfaces de butée (10) faisant saillie depuis la face avant du socle (1).

## Patentansprüche

1. Vorrichtung zur Befestigung von Ballastgewichten an einem Rad einer landwirtschaftlichen Maschine, **dadurch gekennzeichnet, dass** die Vorrichtung aufweist:
- einen Schlüssel (2), der mit einem Ende (21) versehen ist,
- einen Sockel (1), der in etwa eine Scheibe bildet, die vorzugsweise mit einer Öffnung (14) durchbrochen ist, wobei der Sockel ferner auf einer seiner Seiten, der sogenannten Vorderseite, mindestens eine Fläche (11) aufweist, die eine Auflage in einer radialen Richtung des Sockels ermöglicht, sowie mindestens eine Fläche (10) aufweist, die einen Anschlag in einer Richtung senkrecht zum Sockel bildet,
- ein Klemmelement (4, 5), das dazu ausgebildet ist, derart an dem Schlüssel (2) montiert zu werden, dass das Gewicht oder die Gewichte gegen die Vorderseite des Sockels (1) gedrückt werden,
wobei der Sockel (1) ferner in seiner Dicke eine Aussparung (12) aufweist, die in seiner Vorderseite mündet und dazu ausgebildet ist, das Ende (21) des Schlüssels (2) formschlüssig aufzunehmen und zu blockieren, wobei sich die Aussparung (12) an die Form des Endes (21) des Schüssels (2) anpasst, so dass sich das Ende (21) nicht mehr um sich selbst drehen kann und nicht durch die Stelle austreten kann, an der die Aussparung (12) in der Vorderseite des Sockels mündet, wobei der Schlüssel dann aus der Aussparung herausragt und gegen Drehung blockiert wird.

2. Vorrichtung zur Befestigung von Ballastgewichten nach Anspruch 1, **dadurch gekennzeichnet, dass** der Schlüssel (2) mit einem Schaft (20) versehen ist, der an einem seiner Enden an einer Basis (21) befestigt ist, während die Aussparung (12) aus einer Vertiefung (12a) mit einer zur Basis (21) des Schlüssels (2) komplementären Form besteht, die außerdem durch eine Rinne (12b) verlängert wird, die dazu ausgebildet ist, einen Teil des Schafts (20) aufzunehmen, und die in der Vorderseite des Sockels (1) mündet.

3. Vorrichtung zur Befestigung von Ballastgewichten nach einem der vorstehenden Ansprüche, **dadurch gekennzeichnet, dass** der Sockel (1) zwei Auflageflächen (11) aufweist, die sich in Umfangsrichtung und diametral entgegengesetzt erstrecken.

4. Vorrichtung zur Befestigung von Ballastgewichten nach einem der vorstehenden Ansprüche, **dadurch gekennzeichnet, dass** der Sockel (1) zwischen drei und acht, vorzugsweise sechs Anschlagflächen (10) aufweist, die von der Vorderseite des Sockels (1) hervorstehen.

5. Vorrichtung zur Befestigung von Ballastgewichten nach einem der Ansprüche 3 bis 4 in Kombination mit Anspruch 2, **dadurch gekennzeichnet, dass** die Vertiefung (12a) auf der Rückseite entgegensetzt zu der Vorderseite des Sockels (1) offen ist.

6. Vorrichtung zur Befestigung von Ballastgewichten nach einem der vorstehenden Ansprüche, **dadurch gekennzeichnet, dass** der Sockel (1) durchgehende Befestigungslöcher (13) aufweist.

7. Vorrichtung zur Befestigung von Ballastgewichten nach einem der Ansprüche 2 bis 6, **dadurch gekennzeichnet, dass** der Schaft (20) des Schlüssels (2) in Bezug auf die Basis (21) abnehmbar ist.

8. Vorrichtung zur Befestigung von Ballastgewichten nach einem der Ansprüche 2 bis 7, **dadurch gekennzeichnet, dass** der Schaft (20) des Schlüssels (2) durch die Basis (21) verläuft und an einem seiner Enden einen Kopf (200) aufweist, der in einer Aussparung (211) der Basis (21) aufgenommen ist, wobei der Kopf mittels einer in die Basis (21) geschraubten (23) Unterlegscheibe (22) in der Aussparung gehalten wird.

9. Vorrichtung zur Befestigung von Ballastgewichten nach einem der Ansprüche 7 bis 8, **dadurch gekennzeichnet, dass** der Schlüssel zwischen zwei und fünf, vorzugsweise drei verschiedene Schaftlängen aufweist.

10. Verfahren zur Befestigung von Ballastgewichten an einem Rad einer landwirtschaftlichen Maschine mittels einer Vorrichtung, die aufweist: einen Schlüssel (2); einen Sockel (1), der in etwa eine Scheibe bildet, die vorzugsweise mit einer Öffnung (14) durchbrochen ist, wobei der Sockel ferner auf einer seiner Seiten, der sogenannten Vorderseite, mindestens eine Fläche (11) aufweist, die eine Auflage in einer radialen Richtung der Scheibe ermöglicht, sowie mindestens eine Fläche (10) aufweist, die einen Anschlag in einer Richtung senkrecht zu der Scheibe bildet; ein Klemmelement (4, 5), das dazu ausgebildet ist, an dem Schlüssel (2) montiert zu werden; wobei der Sockel (1) in seiner Dicke eine Aussparung (12) aufweist, die in seiner Vorderseite mündet und das Ende (21) des Schlüssels (2) aufnehmen und blockieren kann, wobei sich die Aussparung (12) an die Form des Endes (21) des Schüssels (2) anpasst, so dass sich das Ende (21) nicht mehr um sich selbst drehen kann und nicht durch die Stelle austreten kann, an der die Aussparung (12) in der Vorderseite des Sockels mündet, wobei der Schlüssel dann aus der Aussparung herausragt und gegen Drehung blockiert wird, **dadurch gekennzeichnet, dass** das Verfahren die folgenden Schritte umfasst:
- Befestigen des Sockels (1) an der Radachse,
- Montieren mindestens eines ersten Gewichts (3) an dem Sockel (1), wobei das erste Gewicht gegen die mindestens eine Auflagefläche (11) anliegt und gegen die mindestens eine Anschlagfläche (10) anschlägt,
- Aufnehmen des Endes (21) des Schlüssels (2) in der Aussparung (12),
- Montieren des Klemmelements (4, 5) an dem Schlüssel, so dass das mindestens ein Gewicht (3) gegen die Vorderseite des Sockels (1) gedrückt wird.

11. Verfahren zur Befestigung von Ballastgewichten nach Anspruch 10, **dadurch gekennzeichnet, dass** der Schlüssel (2) mit einem Schaft (20) versehen ist, der an einem seiner Enden an einer Basis (21) befestigt ist, während die Aussparung (12) aus einer Vertiefung (12a) besteht, die dazu ausgebildet ist, die Basis (21) des Schlüssels (2) aufzunehmen, und die durch eine Rinne (12b) verlängert wird, die dazu ausgebildet ist, einen Teil des Schafts (20) aufzunehmen, und die in der Vorderseite des Sockels (1) mündet, so dass die Basis (21) und ein Teil des Schafts (20) des Schlüssels (2) jeweils in der Vertiefung (12a) und der Rinne (12b) aufgenommen werden.

12. Verfahren zur Befestigung von Ballastgewichten nach Anspruch 11, **dadurch gekennzeichnet, dass** vor dem Schritt, in dem das Ende (21) des Schlüssels (2) in der Aussparung (12) aufgenommen wird, die Montage der Basis (21) an dem Schaft (20) erfolgt, wobei der Schaft (20) durch die Basis (21) verläuft und an einem seiner Enden einen Kopf (200) aufweist, der in einer Aussparung (211) der Basis (21) aufgenommen ist, wobei der Kopf mittels einer in die Basis (21) geschraubten (23) Unterlegscheibe (22) in der Aussparung gehalten wird.

13. Verfahren zur Befestigung von Ballastgewichten nach Anspruch 12, **dadurch gekennzeichnet, dass** bei der Montage der Basis (21) an den Schaft (20) des Schlüssels (2) der Schaft (20) aus zwei bis fünf, vorzugsweise drei verschiedenen Längen ausgewählt wird.

14. Verfahren zur Befestigung von Ballastgewichten nach einem der Ansprüche 11 bis 13, **dadurch gekennzeichnet, dass** die Vertiefung (12a) in der Rückseite entgegensetzt zu der Vorderseite des Sockels (1) mündet, so dass die Basis (21) und ein Teil des Schafts (20) des Schlüssels (2) jeweils in der Vertiefung (12a) und der Rinne (12b) von der Rückseite des Sockels (1) aus aufgenommen werden können.

15. Verfahren zur Befestigung von Ballastgewichten nach einem der Ansprüche 10 bis 13, **dadurch gekennzeichnet, dass** das mindestens eine erste Gewicht (3) an zwei Auflageflächen (11) des Sockels (1), die sich in Umfangsrichtung und diametral entgegengesetzt erstrecken, und gegen drei bis acht, vorzugsweise sechs Anschlagflächen (10) montiert wird, die von der Vorderseite des Sockels (1) hervorstehen.

## Claims

1. A device for attaching ballast weights to a wheel of an agricultural machine, **characterised in that** the device includes:
- a wrench (2) provided with an end (21),
- a pedestal (1) forming approximately a disc, preferably perforated with an opening (14), the pedestal further including on one of its faces, referred to as the front face, at least one surface (11) providing support along a radial direction of the pedestal, and at least one surface (10) forming a stop along a direction perpendicular to the pedestal,
- a clamping element (4, 5) for being mounted to the wrench (2), so as to press the weight(s) against the front face of the pedestal (1)
the pedestal (1) further including in its thickness a recess (12) opening onto its front face and for housing and blocking the end (21) of the wrench (2) by form-fitting, the recess (12) embracing the shape of the end (21) of the wrench (2) in such a way that the end (21) can no longer rotate about itself and cannot leave through the point at which the recess (12) opens onto the front face of the pedestal, said wrench thus projecting from the recess and becoming rotatably blocked.

2. The device for attaching ballast weights according to claim 1, **characterised in that** the wrench (2) is provided with a rod (20) attached at one of its ends to a base (21), while the recess (12) consists of an indentation (12a) form-fitted to the base (21) of the wrench (2), from which a channel (12b) for housing part of the rod (20) and opening onto the front face of the pedestal (1) further extends.

3. The device for attaching ballast weights according to any of the preceding claims, **characterised in that** the pedestal (1) includes two support surfaces (11) extending circumferentially and diametrically opposite to each other.

4. The device for attaching ballast weights according to any of the preceding claims, **characterised in that** the pedestal (1) includes between three and eight, preferably six, stop surfaces (10) projecting from the front face of the pedestal (1).

5. The device for attaching ballast weights according to any of claims 3 to 4 in combination with claim 2, **characterised in that** the indentation (12a) is opening onto the rear face opposite to the front face of the pedestal (1).

6. The device for attaching ballast weights according to any of the preceding claims, **characterised in that** the pedestal (1) includes attachment through holes (13).

7. The device for attaching ballast weights according to any of claims 2 to 6, **characterised in that** the rod (20) of the wrench (2) is removable with respect to the base (21).

8. The device for attaching ballast weights according to any of claims 2 to 7, **characterised in that** the rod (20) of the wrench (2) passes through the base (21) and includes at one of its ends a head (200) housed in a recess (211) of the base (21), said head being retained in said recess by means of a washer (22) screwed (23) into the base (21).

9. The device for attaching ballast weights according to any of claims 7 to 8, **characterised in that** the wrench has between two and five, preferably three, different lengths of rod.

10. A method for attaching ballast weights to a wheel of an agricultural machine, by means of a device including a wrench (2), a pedestal (1) forming approximately a disc, preferably perforated along an opening (14), the pedestal further including on one of its faces, called the front face, at least one surface (11) providing support along a radial direction of the disc, as well as at least one surface (10) forming a stop along a direction perpendicular to the disc, a clamping element (4, 5) for being mounted to the wrench (2), the pedestal (1) including in its thickness a recess (12) opening onto its front face and able to house and retain an end (21) of the wrench (2), the recess (12) embracing the shape of the end (21) of the wrench (2) so that the end (21) can no longer rotate about itself and cannot leave through the point at which the recess (12) opens onto the front face of the pedestal, said wrench then extending from said front face and becoming rotatably blocked, **characterised in that** it includes a set of steps in which:
- the pedestal (1) is attached to the wheel axle,
- at least one first weight (3) is mounted to the pedestal (1), the first weight resting against the at least one support surface (11) and stopping against the at least one stop surface (10),
- the dedicated end (21) of the wrench (2) is housed in the recess (12),
- the clamping element (4, 5) is mounted to the wrench so as to press the at least one weight (3) against the front face of the pedestal (1).

11. The method for attaching ballast weights according to claim 10, **characterised in that** the wrench (2) is provided with a rod (20) attached at one of its ends to a base (21), while the recess (12) consists of an indentation (12a) for housing the base (21) of the wrench (2), and from which a channel (12b) for housing part of the rod (20) and opening onto the front face of the pedestal (1) extends, so that the base (21) and part of the rod (20) of the wrench (2) are housed in the indentation (12a) and the channel (12b) respectively.

12. The method for attaching ballast weights according to claim 11, **characterised in that** before the step in which the dedicated end (21) of the wrench (2) is housed in the recess (12), the base (21) is mounted to the rod (20), the rod (20) passing through the base (21) and including at one of its ends a head (200) housed in a recess (211) of the base (21), said head being retained in said recess by means of a washer (22) screwed (23) into the base (21).

13. The method for attaching ballast weights according to claim 12, **characterised in that** upon mounting the base (21) to the rod (20) of the wrench (2), the rod (20) is selected from two to five, preferably three, different lengths.

14. The method for attaching ballast weights according to any of claims 11 to 13, **characterised in that** the indentation (12a) opens onto the rear face, opposite to the front face of the pedestal (1), so that the base (21) and part of the rod (20) of the wrench (2) can be housed in the indentation (12a) and the channel (12b) respectively, from the rear face of the pedestal (1).

15. The method for attaching ballast weights according to any of claims 10 to 13, **characterised in that** the at least one weight (3) is mounted to two circumferentially extending, diametrically opposite support surfaces (11) of the pedestal (1), and against three to eight, preferably six, stop surfaces (10) projecting from the front face of the pedestal (1).
